# EUROPEAN PATENT APPLICATION

(11) **EP 4 455 867 A1**
(43) Date of publication of application: **30.10.2024**
(21) Application number: 23213257.1
(22) Date of filing: 30.11.2023
(51) Int. Cl.: G06F 8/658, G06F 11/14, G06F 8/654, H04L 67/00, G06F 8/65

(54) **VEHICLE SOFTWARE INCREMENTAL UPGRADE METHOD AND SYSTEM, AND VEHICLE**

(30) Priority: 27.04.2023 CN 202310475473
(71) Applicant: Chongqing Changan Automobile Co., Ltd., Chongqing 400023 (CN)
(72) Inventor: Long, Hui, Chongqing 400023 (CN); Liu, Ping, Chongqing 400023 (CN); Ren, Yun, Chongqing 400023 (CN); Cao, Yongwei, Chongqing 400023 (CN)
(74) Representative: Patentanwaltskanzlei Matschnig & Forsthuber OG

(57) **Abstract**

A vehicle software incremental upgrade method and system and a vehicle are provided, belonging to the field of automotive networking technology. The vehicle software incremental upgrade method includes: collecting vehicle software version information and transmitting to an over-the-air technology (OTA) cloud, the vehicle software version information comprising firmware version information and application version information; receiving an upgrade task file issued by the OTA cloud based on the vehicle software version information; parsing the upgrade task file and generating an execution task file to be issued to the execution module; checking preset conditions, and downloading a software package or issuing the execution task when the preset conditions are met; receiving all the feedback task execution status and uploading to the OTA cloud. This method generates an upgrade task file according to the firmware version information and the application version information, generates the execution task file after parsing, also considering the firmware version information and application version information, and can realize the firmware upgrade and application software upgrade at the same time.

## Description

### Field of the Invention

The present invention relates to the field of vehicle networking technology, and in particular, to a task file generation method for vehicle software incremental upgrade, a vehicle software incremental upgrade method, a vehicle software incremental upgrade system and a vehicle.

### Background of the Invention

Over-the-air technology (OTA) realizes remote management of mobile terminal equipment and SIM card data through the air interface of mobile communication. With the development of vehicle and Internet of Things technology, OTA has become a channel for automotive software upgrades. In the past, when the vehicle encountered software failure or needed to upgrade the navigation version, it was necessary to scan and write through the OBD port of the onboard diagnosis system in the 4S store. Now, through OTA, manufacturers can transmit the upgrade package directly to the onboard terminal through the network.

The vehicle OTA type is mainly divided into two categories, firmware-over-the-air (FOTA) and software-over-the-air (SOTA), both of them are the areas that the host factories focus on and gradually implement, which can adapt to the OTA requirements of different scenarios.

FOTA downloads and installs a complete firmware image to the vehicle controller to achieve a complete upgrade of the system function. For example, upgrading the intelligent driving system of the vehicle, so that the driver can enjoy more and more auxiliary driving functions; upgrading the cockpit system of the vehicle can improve the accuracy of driver fatigue detection; upgrading the braking system of the vehicle can improve the braking performance of the vehicle. FOTA involves a complete and systematic update of the core function (control strategy) of the controller, which has a great impact on the performance of the vehicle, the upgrade process has extremely high requirements for timing, stability and safety, meanwhile, the upgrade pre-conditions include gear, power, vehicle speed and other requirements.

SOTA implements an 'incremental update' of the controller function by installing an 'incremental package' to the vehicle controller, which is generally used in entertainment systems and intelligent driving systems. For example, replacing the multimedia system operation interface, optimizing the dashboard display style and updating the map, all of which use the SOTA upgrade method. SOTA involves a small range of functional local updates in the controller application layer, which has less impact on vehicle performance and lower requirements for upgrade preconditions. The incremental update strategy of SOTA can greatly reduce the size of the upgraded package file, thereby saving network traffic and storage space.

A method, device and vehicle for air firmware upgrade is provided by the invention with Pub. No. CN106802813, wherein the method includes: downloading the firmware upgrade package for upgrading the firmware version currently used by the terminal equipment; performing firmware upgrade operation in the backup system partition of the terminal equipment according to the firmware upgrade package; in the system partition configuration information of the terminal equipment, the backup system partition is configured as the main system partition, so that the terminal equipment can be determined according to the system partition configuration information to perform the firmware startup operation based on the system partition upgraded by the firmware during the next startup process. The technical scheme provided by the present disclosure can make the terminal equipment silently realize the air firmware upgrade without the user's perception, and avoid the phenomenon that the user's normal use of the terminal equipment is affected by the need to restart the terminal equipment for many times in the process of using Recovery mode to realize the air firmware upgrade, therefore, the technical scheme provided by the present disclosure is beneficial to improve the user's experience of using terminal equipment.

However, there are still some problems in this method. Firstly, it can only upgrade the overall software, not only upgrade the updated part, leading to a long upgrade time and resulting in a low user experience. Secondly, at present, most of the vehicle factories only support the vehicle software incremental upgrade, but not the vehicle incremental upgrade scheme. Thirdly, most controllers need to be restarted or cut-off restarted after the upgrade to take effect, but there is no unified management of the vehicle's restart action, and spontaneous restart may lead to the failure of the associated upgrade object in the upgrade process.

### Summary of the Invention

One of the purposes of the present invention is to provide a task file generation method for vehicle software incremental upgrade, this method can compare the firmware version information and application version information of the vehicle, and generate upgrade task files based on the comparison results, the upgrade task files only contain software that needs to be upgraded, which can shorten the upgrade time; the second purpose is to provide a vehicle software incremental upgrade method and system, and this method proposes a vehicle incremental upgrade scheme, including a firmware incremental upgrade and an application incremental upgrade.

To achieve the above purpose, the technical scheme of the present invention is as follows:
on the one hand, the present invention provides a task file generation method for vehicle software incremental upgrade, which is applied to the OTA cloud, and the method includes:
comparing the software release version information and the vehicle software version information received from the vehicle to a generate comparison result; both the vehicle software version information and software release version information including firmware version information and application version information; and
generating, according to the comparison result, upgrade task files and software packages.

According to the above technical means, the OTA cloud can generate an upgrade task file containing only the software that needs to be upgraded by comparing the firmware version information and application version information in the vehicle software version information and the software release version information, the upgrade task file is used for the incremental upgrade of the vehicle software to shorten the upgrade time and improve the user experience.

In the implementation of this application, the firmware version information includes: a large version number of the vehicle and the controller version numbers corresponding to different controllers; and the application version information includes: application version numbers corresponding to different applications;

The comparing the vehicle software version information and vehicle software release version information received from vehicle to generate a comparison result includes:
comparing whether the large version numbers of the vehicle in the vehicle software version information and the software release version information are the same, and generating, if the large version numbers of the vehicle are different, a comparison results related to the large version number of the vehicle;
comparing, if the large version numbers of the vehicle are the same, whether the controller version numbers corresponding to the controllers in the vehicle software version information and the software release version information are the same, and generating, if the controller version numbers are different, a comparison result related to the controller version numbers; and
comparing, if the controller version numbers are the same, whether the application version numbers corresponding to applications under the same controller in the vehicle software version information with the software release version information are the same, generating, if the application version number is different, a comparison result related to the application version numbers.

According to the above technical means, the firmware version information and application version information in the vehicle software can be compared in detail, and the comparison can be made from large to small according to the correlation of the vehicle software version, thereby saving the resources consumed by the comparison operation.

In the implementation of this application, the upgrade task files include: a list of objects to be upgraded and preconditions for upgrading.

According to the above technical means, the upgrade task files can clearly reflect the object of this upgrade, and during the upgrade process, incremental upgrades can be performed according to the upgraded object to avoid excessive traffic and time consumed by the whole system upgrade.

The second aspect of the present invention provides a vehicle software incremental upgrade method, which is applied to an upgrade general agent module, wherein the method includes:
collecting the vehicle software version information and transmitting to an OTA cloud, and the vehicle software version information including firmware version information and application version information;
receiving an upgrade task file issued by the OTA cloud based on the vehicle software version information;
parsing the upgrade task file and generating an execution task file to be issued to an execution module;
checking the preset conditions, and downloading a software package or issuing an execution task when the preset conditions are met; and
receiving feedback on task execution status and uploading to the OTA cloud.

According to the above technical means, this method generates the upgrade task files according to the firmware version information and the application version information, after parsing, the firmware version information and application version information, which are also considered in the execution task file, can be generated, and the firmware upgrade and application software upgrade can be realized at the same time.

In the implementation of this application, the upgrade task file is parsed and the execution task file is generated and issued to the execution module, including:
parsing the upgrade task file to obtain a list of objects to be upgraded;
generating an execution task file according to the list of objects to be upgraded and a preset configuration file; and
issuing the execution task file to the execution module.

According to the above technical means, the execution task file is generated according to the list of objects to be upgraded, the execution task file matches the list of objects to be upgraded, which simplifies the task file that needs to be executed during the upgrade process and shortens the upgrade time.

In this application embodiment, the preset configuration file includes a preset upgrade dependency, a preset restart dependency, an installation sequence, restart or cut-off area requirements, a restart sequence and the number of retry rollbacks; and
the generating an execution task file according to the list of objects to be upgraded and a preset configuration file includes:
obtaining, according to the list of objects to be upgraded, corresponding to an upgrade dependency and a restart dependency corresponding to objects to be upgraded from the preset upgrade dependency and preset restart dependency, respectively;
generating an execution task file according to the upgrade dependency, restart dependency, the installation order, the restart or cut-off area requirements, the restart order, and the number of retry rollbacks; and
the execution task file including: task content, execution order, execution role, execution condition, and the number of retry rollbacks.

According to the above technical means, the upgrade dependency and restart dependency are considered in the process of generating the execution task file, and the restart action is managed uniformly to avoid repeated restart or restart failure.

In this application, the vehicle software version information is collected and transmitted to the OTA cloud, including:
initiating a vehicle software version information collection request;
receiving vehicle software version information fed back by the execution module; and
uploading the vehicle software version information to the OTA cloud.

According to the above technical means, the upgrade general agent module mobilizes the execution module to collect the vehicle software version information and uploads to the OTA cloud, and the collected vehicle software version information has high real-time performance and high accuracy.

In the implementation of this application, the checking preset conditions and downloading a software package or issuing an execution task when the preset conditions are met includes:
initiating a download condition check request;
receiving current download condition fed back by the execution module;
downloading the software package from the OTA cloud and transmitting to the execution module when the current download conditions meet the preset download conditions;
initiating an installation condition inspection request;
receiving current installation conditions fed back by the execution module; and
issuing the execution task to the execution module in turn when the current installation conditions meet the preset installation conditions.

According to the above technical means, it is determined whether the current environment is suitable for software package download or installation and upgrade tasks, so as to realize software package download and upgrade under the condition of ensuring the normal use of users and improve the user experience.

The third aspect of the present invention provides a vehicle software incremental upgrade method, which includes:
initiating, by an upgrade general agent module, a collection request of vehicle software version information to an execution module, and the vehicle software version information comprising: firmware version information and application version information;
calling, by the execution module, a version management module to collect the vehicle software version information, and feeding back the collected vehicle software version information back to the upgrade general agent module;
uploading, by the upgrade general agent module, the vehicle software version information to an OTA cloud;
comparing, by the OTA cloud, vehicle software version information and software release version information to generate an upgrade task file and a software package;
receiving and parsing, by the upgrade general agent module, the upgrade task file, and generating an execution task file and issuing to the execution module;
checking, by the upgrade general agent module, preset download conditions, and downloading the software package and transmitting to the execution module when the preset download conditions are met;
checking, by the upgrade general agent module, preset installation conditions, and issuing the execution task to the execution module when the preset installation conditions are met;
receiving and executing, by the execution module, the execution task issued by the upgrade general agent module, and feeding back task execution status to the upgrade general agent module; and
receiving, by the upgrade general agent module, all the feedback task execution status, and uploading to the OTA cloud.

According to the above technical means, this method generates the upgrade task file according to the firmware version information and the application version information, after parsing, the firmware version information and application version information, which are also considered in the execution task file, can be generated, and the firmware upgrade and application software upgrade can be realized at the same time.

In the embodiment of this application, the method further includes:
retrying installation by the execution module according to the number of retry rollbacks in the execution task file if an installation task of the execution module fails; and
performing rolling back by the execution module according to a preset rollback strategy if the installation still fails after retrying.

According to the above technical means, when the upgrade fails, the software is rolled back according to the preset rollback strategy, after the rollback, the software retains the function of the old version to at least ensure the normal operation of the system.

In the embodiment of this application, the method further includes:
verifying, by the execution module, the software package after receiving the software package transmitted by the upgraded general agent module.

According to the above technical scheme, the test software package can determine that the software package is available, find the software package error in time, avoid the installation failure caused by the software package error during the installation or rollback task, and avoid the waste of installation time.

The fourth aspect of the present invention provides a vehicle software incremental upgrade system for performing the vehicle software incremental upgrade method, and the system includes:
an OTA cloud, configured to obtain and compare vehicle software version information and software release version information and generate an upgrade task file and a software package according to a comparison result;
an upgrade general agent module, configured to initiate vehicle software version information collection, initiate condition inspection, receive the upgrade task file issued by the OTA cloud, collect task execution status and perform task scheduling;
an execution module, configured to receive and execute an execution task issued by the upgrade general agent module;
a version management module, configured to provide an acquisition and change operation interface for the vehicle software version information; and
a condition checking module, configured to check download conditions and installation conditions of the software package.

According to the above technical scheme, the OTA cloud in the vehicle software incremental upgrade system can generate the upgrade task file according to the firmware version information and the application version information, the upgrade general agent module parses the upgrade task file and then generates the firmware version information and application version information that are also considered in the execution task file, which can realize the firmware upgrade and application software upgrade at the same time.

The present invention also provides a vehicle, and the vehicle applies the vehicle software incremental upgrade method to perform the vehicle software incremental upgrade.

The beneficial effects of the present invention are as follows:
(1) the invention supports vehicle software incremental upgrade, including firmware upgrade and application software upgrade, which greatly saves the upgrade time and improves the efficiency of upgrade.
(2) The present invention presets the upgrade dependency and restart dependency, and dynamically generates the vehicle installation task according to the dependency, which can complete the installation of all FOTA and SOTA at the same time, if some upgrade objects fail to install, they will also be synchronously rolled back according to the dependency relationship, whether the installation is successful or failed, the security and stability of the function can be ensured, which is more flexible.
(3) The restart task is generated according to the restart dependency relationship, and the restart is managed uniformly to avoid the failure of the upgrade caused by multiple spontaneous restarts and improve the success rate of the upgrade.

### Brief Description of the Drawings

FIG. 1 is a flowchart of a task file generation method for vehicle software incremental upgrade provided by an implementation method of the present invention;
FIG. 2 is a version comparison flowchart of the vehicle software incremental upgrade method provided by an implementation method of the present invention;
FIG. 3 is a flowchart of the vehicle software incremental upgrade method applied to an upgrade general agent module provided by an implementation method of the present invention;
FIG. 4 is a flowchart of the vehicle software incremental upgrade method provided by an implementation method of the present invention;
FIG. 5 is a version collection flow chart of the vehicle software incremental upgrade method provided by an implementation method of the present invention; and
FIG. 6 is a relationship diagram of the vehicle software incremental upgrade system provided by an implementation method of the present invention.

### Detailed Description of the Embodiments

The following will illustrate the implementation of the present invention with reference to the attached drawings and preferred embodiments, and technical personnel in this field can easily understand the other advantages and efficacy of the invention from the contents disclosed in this instruction. The present invention can also be implemented or applied through different specific implementation methods, the details in this instruction can also be modified or changed based on different viewpoints and applications without deviating from the spirit of the invention. It should be understood that the preferred embodiment is only to illustrate the invention, not to limit the scope of protection of the present invention.

It should be noted that the diagram provided in the following embodiments only illustrates the basic idea of the invention in a schematic way, so the diagram only shows the components related to the invention instead of drawing according to the number, shape and size of the components in the actual implementation, the type, quantity and proportion of each component in the actual implementation can be changed at will, and the layout of the components may be more complicated.

For ease of understanding, some of the terms used in the invention are explained as follows:
software upgrade: in the absence of a specific description of the meaning of the scene, the three operations of software update, installation and unloading in this paper are collectively referred to as software upgrade;
software upgrade object: the software upgrade object described in this paper can be either the whole application software or a relatively independent component of the application software (such as dynamic library); and
executing task file: it stipulates all tasks included in a single upgrade, and identifies that the type of software upgrade object is an application software or an integral part (such as a dynamic library) of the application software, if it is an integral part of the application software, it should identify the application software it belongs to, a single task contains a task serial number, an upgrade object (FOTA or SOTA), and an action to be performed (installation, restart, and cut-off area restart).

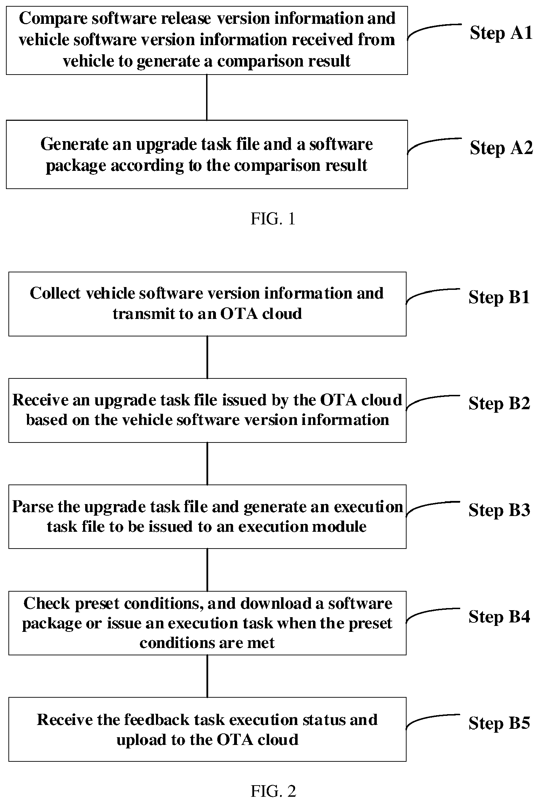

The application implementation example 1 proposes a method for generating incremental upgrade task files for vehicle software, which is applied to the OTA cloud, as shown in FIG. 1, and the method includes the following steps:
Step A1: Compare the software release version information and the vehicle software version information received from the vehicle to generate a comparison result, both the vehicle software version information and software release version information including firmware version information and application version information; and
Step A2: Generate upgrade task files and software packages according to the comparison result.

In the implementation of this application, the vehicle software version information is the object and the corresponding version number contained in the vehicle software used by the current vehicle, and the software release version information is the object and the corresponding version number contained in the latest version of the vehicle software received by the current OTA cloud.

In this application, in the process of vehicle version management, the OTA cloud connects the SOTA application version to its own FOTA version for unified management, that is, the large version of the vehicle includes all FOTA object versions and the corresponding SOTA object version set. Generally speaking, the large version of the vehicle contains multiple controllers, that is, FOTA objects, each controller contains an unequal number of application software, that is, SOTA objects, in which the large version of the vehicle and the controller are classified as firmware. The example is shown in Table 1.

**Table 1**

| Large version number of the vehicle | FOTA object | FOTA version number | SOTA object | SOTA version number |
|---|---|---|---|---|
| Vehicle version v1.0 | A | v1.0 | a1 | v1.0 |
| | | | a2 | v1.1 |
| | | | a3 | v1.2 |
| | B | v1.1 | b1 | v1.0 |
| | C | v1.0 | | |

In the implementation of this application, the firmware version information includes: the vehicle's large version numbers and the controller version numbers corresponding to different controllers, namely the FOTA version number; the application version information includes: application version numbers corresponding to different applications, namely SOTA version number;
the comparing the vehicle software version information and software release version information received from the vehicle to generate a comparison result, as shown in FIG. 2, includes:
comparing whether the large version numbers of the vehicle in the vehicle software version information and the software release version information are the same, and generating if the large version numbers of the vehicle are different, a comparison results related to the large version numbers of the vehicle;
comparing, if the large version numbers of the vehicle are the same, whether the controller version numbers corresponding to the controllers in the vehicle software version information and the software release version information are the same, and generating, if the controller version numbers are different, a comparison result related to the controller version numbers; and
comparing, if the controller version numbers are the same, whether the application version numbers corresponding to applications under the same controller in the vehicle software version information with the software release version information are the same, generating, if the application version number is different, a comparison result related to the application version numbers.

According to the above technical means, comparing the firmware version information and application version information in the vehicle software in detail, and comparing them from large to small according to the correlation of the vehicle software version, and saving the resources consumed by the comparison operation.

Taking the vehicle version of the example in Table 1 as an example, in the process of comparing the vehicle software version information and the vehicle software release version information, the large version numbers of the vehicle are first compared, if the large version numbers of the vehicle are different, a generated comparison result shows that the large version numbers of the vehicle are different, and the large version of the vehicle needs to be upgraded; if the large version numbers of the whole vehicle are the same, the version numbers of the controller are compared one by one, and the controller with different version number needs to be upgraded; and if the version numbers of a controller are the same, the application version numbers of the controller are compared one by one, if the same, it does not need to be upgraded, otherwise it needs to be upgraded.

After comparing the results, the OTA cloud generates an upgrade task file and a software package based on the comparison results, the upgrade task file contains a list of objects to be upgraded and a pre-upgrade condition; the software package includes: software upgrade package and software rollback package, the software upgrade package is the upgrade package of software with different version numbers, the software rollback package is the software package corresponding to the current version number of the vehicle software. The upgrade task file can clearly reflect the object of this upgrade, and during the upgrade process, incremental upgrades can be performed according to the upgraded object to avoid excessive traffic and time consumed by the entire system upgrade.

According to the above technical means, the OTA cloud may generate an upgrade task file containing only the software that needs to be upgraded by comparing the firmware version information and application version information in the vehicle software version information and the software release version information. The upgrade task file is used for the incremental upgrade of the vehicle software to shorten the upgrade time and improve the user experience.

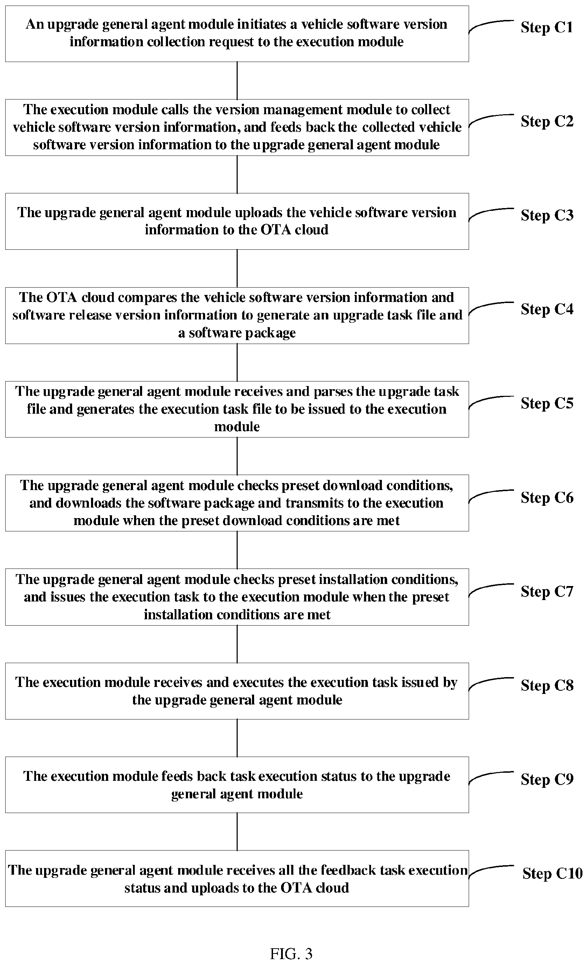

The second embodiment of the present invention provides a vehicle software incremental upgrade method, which is applied to an upgrade the general agent module, as shown in FIG. 3, and the method includes the following steps:
Step B 1: Collect vehicle software version information and transmit to the OTA cloud, the vehicle software version information including firmware version information and application version information. In the implementation of this application, the collection of vehicle software version information first needs to initiate a vehicle software version information collection request; after the request is executed by the execution module, the general agent module is upgraded and then the vehicle software version information fed back by the execution module is received; finally, the summarized vehicle software version information is uploaded to the OTA cloud. According to the above technical means, the upgrade general agent module mobilizes the execution module to collect the vehicle software version information and uploads to the OTA cloud, and the collected vehicle software version information has high real-time performance and high accuracy.
Step B2: Receive an upgrade task file issued by the OTA cloud based on the vehicle software version information. In this application implementation case, the upgrade task file is generated by the OTA cloud after comparing the vehicle software version information and the software release version information.
Step B3: Parse the upgrade task file and generate the execution task file to be issued to an execution module, including:
   parsing the upgrade task file to obtain the list of objects to be upgraded; and
   generating an execution task file according to the list of objects to be upgraded and a preset configuration file, the execution task file, in the implementation of this application, the preset configuration files include: a preset upgrade dependency, a preset restart dependency, an installation order, restart or cut-off area requirements, a restart order, and the number of retry rollbacks.

Issue the execution task file to the execution module, if the generation of the execution task file fails, the log is logged and uploaded to the OTA cloud.

According to the above technical means, the execution task file is generated according to the list of objects to be upgraded, the execution task file matches the list of objects to be upgraded, which simplifies the task file that needs to be executed during the upgrade process and shortens the upgrade time.

In the implementation of this application, the generating an execution task file according to the list of objects to be upgraded and a preset configuration file includes:
obtaining, according to the list of objects to be upgraded, corresponding to an upgrade dependency and a restart dependency corresponding to objects to be upgraded from the preset upgrade dependency and preset restart dependency, respectively;
generating an execution task file according to upgrade dependency, restart dependency, the installation order, the restart or cut-off area requirements, the restart order, and the number of retry rollbacks; and
the execution task file includes: task content, execution order, execution role, execution condition, and the number of retry rollbacks. Wherein, the execution order is closely related to the installation dependency and restart dependency.

Taking the vehicle software version information in Table 1 as an example, it is assumed that the software upgrade version information is shown in Table 2.

**Table 2**

| Large version number of the vehicle | FOTA object | FOTA version number | SOTA object | SOTA version number |
|---|---|---|---|---|
| Vehicle version v1.0 | A | v1.0 | a1 | v1.1 |
| | | | a2 | v1.2 |
| | | | a3 | v1.3 |
| | B | v1.2 | b1 | v1.2 |
| | C | v1.0 | | |

By comparing the vehicle software version information and vehicle software upgrade version information, it can be seen that in this upgrade process, it is necessary to upgrade the SOTA object a1, SOTA object a2, SOTA object a3, FOTA object B and SOTA object b1 subordinate to FOTA object B. It is assumed that during the upgrade process, SOTA object a1 and SOTA object a2 have installation dependencies, SOTA object a2 and SOTA object a3 have restart dependencies, and FOTA object A and FOTA object B have no dependencies. According to the order of first upgrading and restarting the vehicle software, then upgrading and restarting the FOTA object, and then upgrading and restarting the SOTA object, when constructing the execution task file, the execution order of the upgrade task of the FOTA object B is 0, the execution order of the restart task of the FOTA object B is 1, the execution order of the upgrade task of the SOTA object b1 is 2, and the execution order of the restart task of the SOTA object b1 is 3; and the execution order of the upgrade task of SOTA object a1 is 0, the execution order of the restart task of SOTA object a1 is 1, the execution order of the upgrade task of SOTA object a2 is 2, the execution order of the installation task of SOTA object a3 is 0, and the execution order of the restart task of SOTA object a2 and SOTA object a3 is 3. The execution role, execution condition and retry rollback times of each task are set according to the requirements.

After generating execution tasks according to the above execution order, the execution tasks with the execution order of 0 can be constructed as a task group, and the execution tasks with the execution order of 1 can be constructed as a task group, analogy in turn, during execution, tasks are issued in groups.

It should be noted that the above example only shows the dependencies between multiple SOTA objects belonging to the same controller, in practical applications, the dependencies between FOTAs or SOTAs between the same or different controllers can be configured.

According to the above technical means, the upgrade dependency and restart dependency are considered in the process of generating the execution task file, and the restart action is managed uniformly to avoid repeated restart or restart failure.

Step B4: Check the preset conditions, and download a software package or issue an execution task when the preset conditions are met.

In the implementation of this application, the preset conditions include the download conditions before downloading the software package and the installation conditions before the execution module performs the task, the software package needs to be downloaded first, and the execution module may perform the task, therefore, the download condition check is performed first, and then the installation condition check. Specifically including:
initiating a download condition check request; and
receiving current download conditions fed back by the execution module, download conditions may include the current traffic bandwidth utilization, vehicle battery power range and so on.
comparing whether the current download conditions meet the preset download conditions;
downloading the software package from the OTA cloud and transmitting to the execution module when the preset download conditions are met, and if the preset download conditions are not met, check the download conditions continuously to wait for the time when the vehicle's download conditions meet the preset download conditions;
initiating installation condition inspection request; and
receiving the current installation conditions fed back by the execution module, the installation conditions include: a driving gear, a battery power range, a temperature lower limit, and a power gear;
comparing whether the current installation conditions meet the preset installation conditions; and
issuing the execution task to the execution module in turn when the preset installation conditions are met, if the preset installation conditions are not met, checking the installation conditions continuously to wait for the time when the vehicle's installation conditions meet the preset installation conditions.

According to the above technical means, it is determined whether the current environment is suitable for software package download or installation and upgrade tasks, so as to realize software package download and upgrade under the condition of ensuring the normal use of users and improve the user experience.

In the actual application process, there are multiple execution modules, which can perform tasks in parallel at the same time. It is assumed that the vehicle has three execution task modules. Taking the execution task file constructed above as an example, in the upgrade process, the general agent module is first upgraded to issue execution tasks with an execution order of 0, there are three execution tasks with an execution order of 0, which can be issued to different execution modules for execution. If and only upgrade the general agent module to receive the feedback of the three execution modules after the successful execution of the task, the upgrade general agent module issues the execution task in order of 1, and so on. By considering the installation dependency and restart dependency in the process of constructing the execution task file, the execution order of the execution task is generated. In the process of task execution, executing the task according to the execution order can avoid the upgrade failure caused by the unfinished pre-upgrade task, meanwhile, the restart task is managed uniformly to reduce the number of restarts and the upgrade failure caused by the restart of the associated upgrade object.

Step B5: Receive all the feedback task execution status and upload to the OTA cloud.

According to the above technical means, this method generates the upgrade task files according to the firmware version information and the application version information, after parsing, the firmware version information and application version information, which are also considered in the execution task file, can be generated, and the firmware upgrade and application software upgrade can be realized at the same time.

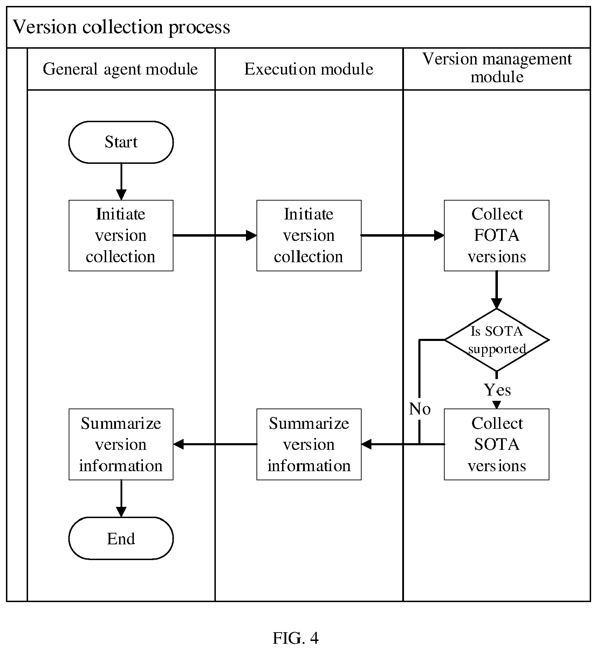

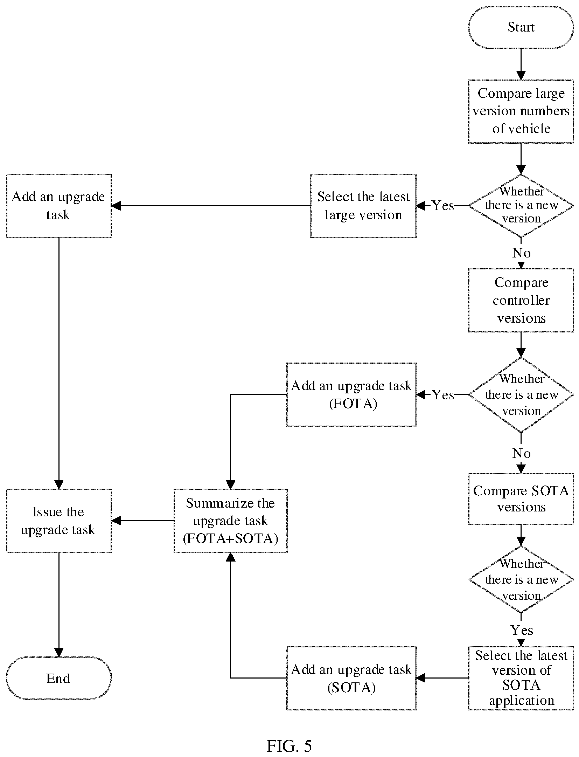

The third embodiment of the present invention provides a vehicle software incremental upgrade method, as shown in FIG. 4, and the method includes:
Step C1: Initiate, by an upgrade general agent module, a collection request of vehicle software version information to an execution module, the vehicle software version information including: firmware version information and application version information.
Step C2: Call, by the execution module, a version management module to collect the vehicle software version information, and feed back the collected vehicle software version information back to the upgrade general agent module. When collecting the version information of the vehicle software, the version management module first collects the firmware version information, and then determines whether the firmware supports the application software upgrade, if it is supported, the application version information is further collected, otherwise, the firmware version information is directly fed back to the execution module, the execution module directly summarizes all version information and uploads to the upgrade general agent module, and the vehicle software version information collection process is shown in FIG. 5.
Step C3: Upload, by the upgrade general agent module, the vehicle software version information to an OTA cloud.
Step C4: Compare, by the OTA cloud, vehicle software version information and software release version information to generate an upgrade task file and a software package.
Step C5: Receive and parse, by the upgrade general agent module, the upgrade task file, and generate an execution task file and issue to the execution module.
Step C6: Check, by the upgrade general agent module, preset download conditions, and download the software package and transmit to the execution module when the preset download conditions are met.
Step C7: Check, by the upgrade general agent module, preset installation conditions, and issue the execution task to the execution module when the preset installation conditions are met.
Step C8: Receive, by the execution module, the execution task issued by the upgrade general agent module.
Step C9: Execute, by the execution module, and feed back task execution status to the upgrade general agent module.
Step C10: Receive, by the upgrade general agent module, all the feedback task execution status, and upload to the OTA cloud.

According to the above technical means, this method generates the upgrade task files according to the firmware version information and the application version information, after parsing, the firmware version information and application version information, which are also considered in the execution task file, can be generated, and the firmware upgrade and application software upgrade can be realized at the same time.

In the embodiment of this application, the method further includes:
retrying installation by the execution module according to the number of retry rollbacks in the execution task file if an installation task of the execution module fails; and
performing rolling back by the execution module according to a preset rollback strategy if the installation still fails after retrying.

According to the above technical means, rollback is performed according to the preset rollback strategy when the upgrade fails, the software after rollback retains the function of the old version, whether the installation is successful or failed, it can ensure the security and stability of the function and is more flexible.

In the embodiment of this application, the method also includes:
the execution module verifies the software package after receiving the software package transmitted by the upgraded general agent module. If it is a differential package, a differential restore operation is required.

According to the above technical scheme, the test software package can determine that the software package is available, find the software package error in time, avoid the installation failure caused by the software package error during the installation or rollback task, and avoid the waste of installation time.

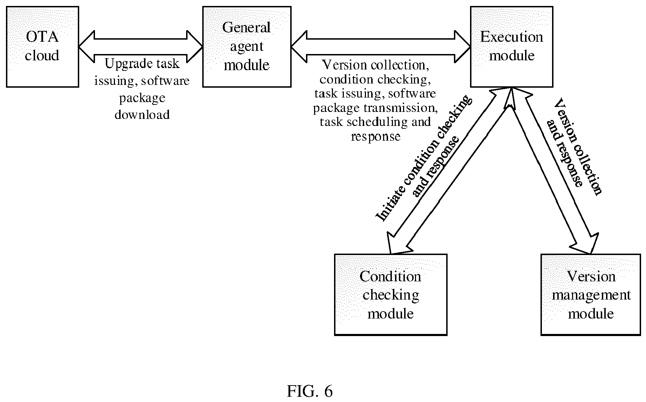

The embodiment of the present invention further provides a vehicle software incremental upgrade system for performing the vehicle software incremental upgrade method, as shown in FIG. 6, and the system includes the following.

An OTA cloud is configured to obtain and compare the vehicle software version information and software release version information, and generate an upgrade task file and a software package according to a comparison results. The OTA cloud is mainly responsible for vehicle version maintenance, software package management, version comparison, upgrade task distribution, upgrade log collection, etc.

An upgrade general agent module is configured to initiate vehicle software version information collection, initiate condition inspection, receive the upgrade task file issued by the OTA cloud, collect task execution status, and perform task scheduling. The upgrade general agent module is mainly responsible for communicating with the OTA cloud, checking the conditions of the vehicle, initiating version collection, receiving upgrade tasks issued by the cloud, and scheduling tasks.

An execution module is configured to receive and execute an execution task issued by the upgrade general agent module. The agent software deployed in the controller intelligent system is mainly responsible for receiving the instructions issued by the general agent module and performing specific tasks, including software deployment, version collection, installation, restart, etc.

A version management module is configured to provide an acquisition and change operation interface for the vehicle software version information, such as software version query, deleting, adding and update.

A condition checking module is configured to check the download conditions and installation conditions of the software package, the condition checking module is mainly responsible for detecting the upgrade conditions before the software upgrade, one is to detect whether the system upgrade conditions are met, and the other is to pre-check the dependence of the upgraded software. The installation process can only be carried out when both are satisfied.

According to the above technical scheme, the OTA cloud in the vehicle software incremental upgrade system can generate the upgrade task file according to the firmware version information and the application version information, the upgrade general agent module parses the upgrade task file and then generates the firmware version information and application version information that are also considered in the execution task file, which can realize the firmware upgrade and application software upgrade at the same time.

The present invention also provides a vehicle, and the vehicle applies the vehicle software incremental upgrade method to perform the vehicle software incremental upgrade.

The above embodiments are only the better embodiments for fully explaining the invention, and the protection scope of the present invention is not limited to this. The equivalent substitution or transformation made by the technical personnel in this technical field on the basis of the present invention is within the scope of protection of the present invention.

## Claims

1. A task file generation method for vehicle software incremental upgrade, applied to the OTA cloud, wherein the method comprises:
comparing software release version information and vehicle software version information received from vehicle to generate a comparison result, both the vehicle software version information and software release version information comprising firmware version information and application version information; and
generating, according to the comparison result, upgrade task files and software packages.

2. The task file generation method for vehicle software incremental upgrade according to claim 1, wherein the firmware version information comprises: a large version number of the vehicle and controller version numbers corresponding to different controllers; and the application version information comprises: application version numbers corresponding to different applications; and
the comparing software release version information and vehicle software version information received from vehicle to generate a comparison result comprises:
comparing whether the large version numbers of the vehicle in the vehicle software version information and the software release version information are the same, and generating, if the large version numbers of the vehicle are different, a comparison result related to the large version numbers of the vehicle;
comparing, if the large version numbers of the vehicle are the same, whether the controller version numbers corresponding to the controllers in the vehicle software version information and the software release version information are the same, and generating, if the controller version numbers are different, a comparison result related to the controller version numbers; and
comparing, if the controller version numbers are the same, whether the application version numbers corresponding to applications under the same controller in the vehicle software version information with the software release version information are the same, generating, if the application version number is different, a comparison result related to the application version numbers.

3. The task file generation method for vehicle software incremental upgrade according to claim 1, wherein the upgrade task file comprises: a list of objects to be upgraded and preconditions for upgrading.

4. A vehicle software incremental upgrade method, applied to an upgrade general agent module, wherein the method comprises:
collecting vehicle software version information and transmitting to an over-the-air technology (OTA) cloud, the vehicle software version information comprising firmware version information and application version information;
receiving an upgrade task file issued by the OTA cloud based on the vehicle software version information;
parsing the upgrade task file and generating an execution task file to be issued to an execution module;
checking preset conditions and downloading a software package or issuing an execution task when the preset conditions are met; and
receiving feedback on task execution status and uploading to the OTA cloud.

5. The vehicle software incremental upgrade method according to claim 4, wherein the parsing the upgrade task file and generating an execution task file to be issued to an execution module comprises:
parsing the upgrade task file to obtain a list of objects to be upgraded;
generating an execution task file according to the list of objects to be upgraded and a preset configuration file; and
issuing the execution task file to the execution module.

6. The vehicle software incremental upgrade method according to claim 5, wherein the preset configuration file comprises a preset upgrade dependency, a preset restart dependency, an installation sequence, restart or cut-off area requirements, a restart sequence, and the number of retry rollbacks; and
the generating an execution task file according to the list of objects to be upgraded and a preset configuration file comprises:
obtaining, according to the list of objects to be upgraded, corresponding to an upgrade dependency and a restart dependency corresponding to objects to be upgraded from the preset upgrade dependency and preset restart dependency, respectively;
generating an execution task file according to upgrade dependency, restart dependency, the installation order, the restart or cut-off area requirements, the restart order, and the number of retry rollbacks, wherein
the execution task file comprises: task content, execution order, execution role, execution condition, and the number of retry rollbacks.

7. The vehicle software incremental upgrade method according to claim 4, wherein the collecting vehicle software version information and transmitting to OTA cloud comprises:
initiating a vehicle software version information collection request;
receiving vehicle software version information fed back by the execution module; and
uploading the vehicle software version information to the OTA cloud.

8. The vehicle software incremental upgrade method according to claim 5, wherein the checking preset conditions and downloading a software package or issuing an execution task when the preset conditions are met comprises:
initiating a download condition check request;
receiving current download conditions fed back by the execution module;
downloading the software package from the OTA cloud and transmitting to the execution module when the current download conditions meet the preset download conditions;
initiating an installation condition inspection request;
receiving current installation conditions fed back by the execution module; and
issuing the execution task to the execution module in turn when the current installation conditions meet the preset installation conditions.

9. A vehicle software incremental upgrade method, comprising:
initiating, by an upgrade general agent module, a collection request of vehicle software version information to an execution module, and the vehicle software version information comprising: firmware version information and application version information;
calling, by the execution module, a version management module to collect the vehicle software version information, and feeding back the collected vehicle software version information back to the upgrade general agent module;
uploading, by the upgrade general agent module, the vehicle software version information to an over-the-air technology (OTA) cloud;
comparing, by the OTA cloud, vehicle software version information and software release version information to generate an upgrade task file and a software package;
receiving and parsing, by the upgrade general agent module, the upgrade task file, and generating an execution task file and issuing to the execution module;
checking, by the upgrade general agent module, preset download conditions, and downloading the software package and transmitting to the execution module when the preset download conditions are met;
checking, by the upgrade general agent module, preset installation conditions, and issuing the execution task to the execution module when the preset installation conditions are met;
receiving and executing, by the execution module, the execution task issued by the upgrade general agent module, and feeding back task execution status to the upgrade general agent module; and
receiving, by the upgrade general agent module, all the feedback task execution status, and uploading to the OTA cloud.

10. The vehicle software incremental upgrade method according to claim 9, wherein the method further comprises:
retrying installation by the execution module according to the number of retry rollbacks in the execution task file if an installation task of the execution module fails; and
performing rolling back by the execution module according to a preset rollback strategy if the installation still fails after retrying.

11. The vehicle software incremental upgrade method according to claim 9, wherein the method further comprises:
verifying, by the execution module, the software package after receiving the software package transmitted by the upgraded general agent module.

12. A vehicle software incremental upgrade system, wherein the system is configured to perform the vehicle software incremental upgrade method according to any of the claims 9-11, and the system comprises:
an over-the-air technology (OTA) cloud, configured to obtain and compare vehicle software version information and software release version information and generate an upgrade task file and a software package according to a comparison result;
an upgrade general agent module, configured to initiate vehicle software version information collection, initiate condition inspection, receive the upgrade task file issued by the OTA cloud, collect task execution status and perform task scheduling;
an execution module, configured to receive and execute an execution task issued by the upgrade general agent module;
a version management module, configured to provide an acquisition and change operation interface for the vehicle software version information; and
a condition checking module, configured to check download conditions and installation conditions of the software package.

13. A vehicle, wherein the vehicle applies the vehicle software incremental upgrade method according to any of the claims 9-11 to perform the vehicle software incremental upgrade.
